# EUROPÄISCHE PATENTSCHRIFT

(11) **EP 3 654 473 B1**
(45) Veröffentlichungstag und Bekanntmachung des Hinweises auf die Patenterteilung: **03.03.2021**
(21) Anmeldenummer: 18206648.0
(22) Anmeldetag: 16.11.2018
(51) Int. Cl.: H02G 3/10, H02G 3/14

(54) **ELEKTRISCHER SCHALTER**
ELECTRIC SWITCH
COMMUTATEUR ÉLECTRIQUE

(43) Veröffentlichungstag der Anmeldung: 20.05.2020
(73) Patentinhaber: GIRA GIERSIEPEN GmbH & Co. KG, 42477 Radevormwald (DE)
(72) Erfinder: LANKUTTIS, Klaus, 51465 Bergisch Gladbach (DE); WEBER, Jutta, 42477 Radevormwald (DE); PANKNIN, Jürgen, 42477 Radevormwald (DE)
(74) Vertreter: Patent- und Rechtsanwälte Dr. Solf & Zapf

(56) Entgegenhaltungen:
- EP-A1- 3 059 819
- DE-A1- 1 640 409
- DE-A1- 2 843 891

## Beschreibung

Die Erfindung betrifft einen elektrischen Schalter gemäß dem Oberbegriff des Anspruchs 1.

Ein bekannter derartiger elektrischer Schalter ist in der EP 3 059 819 A1 beschrieben. Es handelt sich dabei um einen elektrischen Schalter mit einem Schaltersockel zur Aufnahme elektrischer Anschlusskontakte und von elektrischen Schaltelementen sowie von die elektrischen Schaltelemente betätigenden mechanischen, eine Schaltbewegung übertragenden Schaltelementen, sowie mit einem Abdeckrahmen und mit einer innerhalb des Abdeckrahmens gelagerten Schalterwippe oder Schaltertaste sowie mit einem Tragring zum Befestigen des Schaltersockels in einer Montageöffnung, insbesondere in einer Unterputzdose. Um zu erreichen, dass ausgehend von einer optimalen Mittellage beim Einbau in einer Montageöffnung durch eine seitliche und/oder rotatorische Lageveränderung des Tragrings mit dem Schaltersockel hervorgerufene Einbauabweichungen derart ausgleichbar sind, dass eine Veränderung des Spaltbreitenmaßes des Spaltes zwischen dem Abdeckrahmen und der Schaltertaste bzw. der Schalterwippe vermieden wird, ist dabei vorgesehen, dass die Schalterwippe bzw. die Schaltertaste auf einem rahmenförmigen Klemmstück schwenkbar gelagert ist, wobei das Klemmstück in Bezug auf den Tragring um eine Mittelsenkrechte auf eine Öffnungsebene einer von dem Tragring umschlossenen Tragringöffnung drehbar und/oder in Bezug auf die Mittelsenkrechte lateral verschiebbar ist.

Dadurch, dass das Klemmstück in Bezug auf die Öffnungsebene der Tragringöffnung senkrecht verschiebbar und klemmend gelagert ist, ist es möglich, Abweichungen in der Ausrichtung des Tragrings mit dem Schaltersockel in der Montageöffnung so auszugleichen, dass ein zwischen der Schalterwippe bzw. der Schaltertaste und dem Abdeckrahmen bestehendes Spaltbreitenmaß über die gesamte Spaltlänge konstant bleibt. Denn das Klemmstück kann sich in Bezug auf den Abdeckrahmen ausrichten, und somit erfolgt auch eine Ausrichtung der Schalterwippe bzw. der Schaltertaste, so dass sich das Spaltbreitenmaß aufgrund der Lageveränderung des Schaltersockels in der Montageöffnung einer Wand oder dergleichen nicht auf die Spaltbreite auswirkt. Zudem wird durch die senkrechte Verschiebbarkeit des Tragrings ein Tapetenausgleich möglich.

In einer speziellen, in der EP 3 059 819 A1 beschriebenen Ausführung weisen die am Schaltersockel gelagerten Schaltelemente an ihrer der Schalterwippe bzw. der Schaltertaste zugekehrten Seite als Hohlprofile ausgebildete Ansätze auf. Die Schalterwippe bzw. die Schaltertaste weist in komplementärer Ausbildung an ihrer Unterseite als Klemmfortsätze wirkende Profilfortsätze auf, die im zusammengesetzten Zustand des bekannten Schalters in die Hohlprofil-Ansätze längsverschieblich kraftschlüssig und in ihrer Umfangsrichtung formschlüssig eingreifen bzw. in diese eingeführt sind. Diese längsverschiebbare Lagerung der Profilfortsätze in den Hohlprofil-Ansätzen trägt zudem zur Ermöglichung des Tapetenausgleichs bei. Die insbesondere vier vorgesehenen, in Fig. 9 der EP 3 059 819 A1 dargestellten Profilfortsätze weisen ein in der Draufsicht bzw. im Querschnitt offenes, von der Grundform her U-förmiges Profil auf. Die Schenkel des "U" weisen jeweils außenseitig Nuten auf, so dass an ihren Außenseiten an den beiden Enden über eine Höhe der Profilfortsätze in Längsrichtung der Nut verlaufende Funktionsflächen zur jeweiligen Anlage in den komplementären Hohlprofil-Ansätzen ausgebildet sind.

Der Erfindung liegt die Aufgabe zugrunde, einen elektrischen Schalter der eingangs genannten Art bei Wahrung seiner Vorteile, wie das Erreichen von gleichmäßigen und kleinen Spalten bei seiner Montage, sowie von kleinen Schaltwinkeln und von einem ausreichenden Tapetenausgleich, unter den unterschiedlichsten Installationsbedingungen, konstruktiv derart verbessern, dass der elektrische Schalter eine höhere Montagefreundlichkeit und eine verbesserte Kompatibilität mit unterschiedlichen Schalterwippen und Wipptastern bzw. mit verschiedenen Tastschaltervarianten - jeweils in Einfach- oder Mehrfachausführung, wie insbesondere Doppel- oder Dreifachschalter - aufweist. Darüber hinaus sollen insbesondere für die Verbindung der im Montagezustand ineinander greifenden Profilfortsätze und Hohlprofil-Ansätze - und zwar insbesondere in fertigungsoptimaler Weise - toleranzerhabene Eintauchgeometrien geschaffen werden.

Die Aufgabe wird erfindungsgemäß durch die Merkmale des kennzeichnenden Teils des Anspruchs 1 gelöst.

Dadurch, dass die Funktionsflächen der Nutaußenwände höhenversetzt und/oder winkelversetzt zueinander angeordnet sind, wird vorteilhafterweise erfindungsgemäß erreicht, dass sich in der Klemmverbindung der Hohlprofil-Ansätze und der Profilfortsätze lokal ein durch Parallelwände begrenzter oder ein keilförmiger Spalt ausbildet. Auf diese Weise wird mindestens ein zusätzlicher Freiheitsgrad für eine laterale und/oder rotatorische Bewegung der Profilfortsätze innerhalb der Hohlprofil-Ansätze geschaffen.

Dadurch können mit Vorteil einerseits im Rahmen der zulässigen Bauteiltoleranzen auftretende Maß- und/oder Formabweichungen der ineinander greifenden Bauteile ausgeglichen werden. Dieses Merkmal wird unter dem Begriff "Toleranzerhabenheit" subsumiert. Andererseits bietet der Spalt auch die Möglichkeit einer besseren, insbesondere federelastischen Deformation, wenn ein Werkzeug, wie z. B. ein Schraubendreher, von außen seitlich zwischen die Schalterwippen oder den Wipptaster und die am Schaltersockel gelagerten Schaltelemente angesetzt wird, um den Profilfortsatz der Schalterwippe oder des Wipptasters zur Demontage aus dem korrespondierenden Hohlprofil-Ansatz herauszuhebeln.

In einer vorteilhaften Ausführungsform der Erfindung kann dabei vorgesehen sein, dass die Schenkel des U der Profilfortsätze jeweils nicht rechtwinklig zur Basis des U stehen. Ein Schenkel des U steht somit in einem spitzen Winkel und der andere Schenkel des U in einem stumpfen Winkel zur Basis des U. Außerdem verläuft dabei insbesondere die jeweilige Basis des U schräg zu den äußeren Kanten der Schaltertaste oder -wippe.

Weitere vorteilhafte Ausgestaltungen der Erfindung ergeben sich aus der folgenden Figurenbeschreibung und den abhängigen Ansprüchen.

Es zeigen:
- Fig. 1: eine perspektivische Unteransicht eines Oberteils einer bevorzugten Ausführung eines erfindungsgemäßen elektrischen Schalters,
- Fig. 2: eine perspektivische Draufsicht auf ein komplementäres Unterteil für das in Fig. 1 dargestellte Oberteil,
- Fig. 3: ergänzend zu Fig. 1, eine Draufsicht auf das in Fig. 1 dargestellte Oberteil, einschließlich Abdeckrahmen,
- Fig. 4: eine perspektivische Ansicht auf das in Fig. 1 dargestellte Oberteil, einschließlich Abdeckrahmen,
- Fig. 5: eine Draufsicht auf den Abdeckrahmen allein,
- Fig. 6: ergänzend und zur besseren Veranschaulichung von Fig. 1 und 2, in Vorderansicht, eine perspektivische Explosionsdarstellung von wichtigen Teilen aus dem Oberteil und aus dem Unterteil des in Fig. 1 und 2 dargestellten erfindungsgemäßen elektrischen Schalters,
- Fig. 7: eine perspektivische Draufsicht auf ein mechanisches Schaltelement des erfindungsgemäßen elektrischen Schalters,
- Fig. 8: eine Schnittdarstellung von vier ineinander greifenden Hohlprofil-Ansatz-Profilfortsatz-Paaren eines erfindungsgemäßen elektrischen Schalters,
- Fig. 9: eine vergrößerte Einzelheit zu Fig. 8 (Hohlprofil-Ansatz-Profilfortsatz-Paar in der linken oberen Ecke von Fig. 8),
- Fig. 10 und 11: ein in die Profilfortsätze eines erfindungsgemäßen elektrischen Schalters einsetzbares Sperrteil in zwei perspektivischen Ansichten,
- Fig. 12: eine perspektivische Unteransicht eines Oberteils, ähnlich wie in Fig. 1, jedoch ohne Klemmstück, mit einem in Fig. 10 und 11 dargestellten Sperrteil im Montagezustand.

In den verschiedenen Figuren der Zeichnung sind gleiche Teile stets mit denselben Bezugszeichen versehen, so dass sie in der Regel auch nur einmal beschrieben werden.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

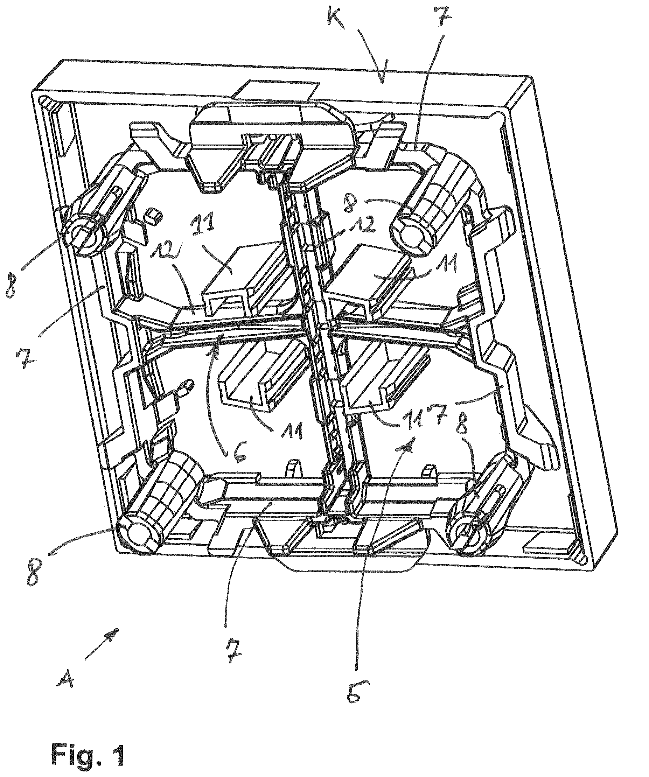

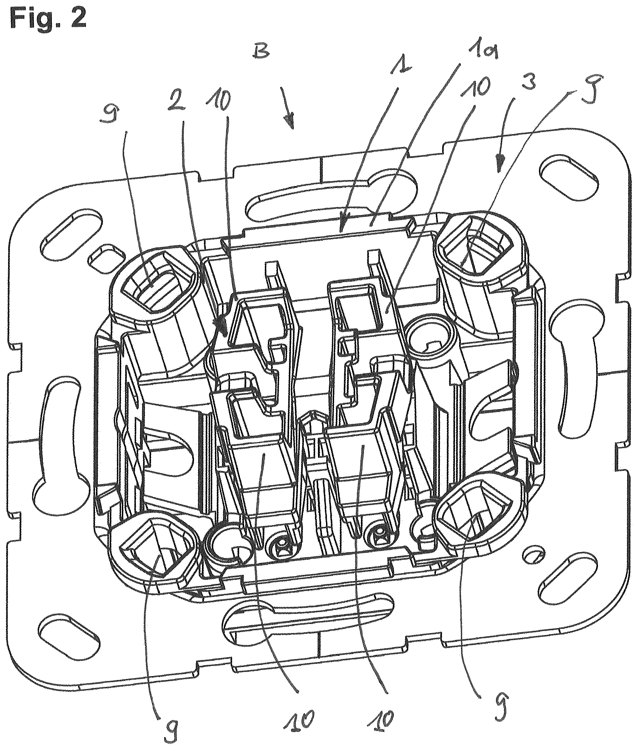

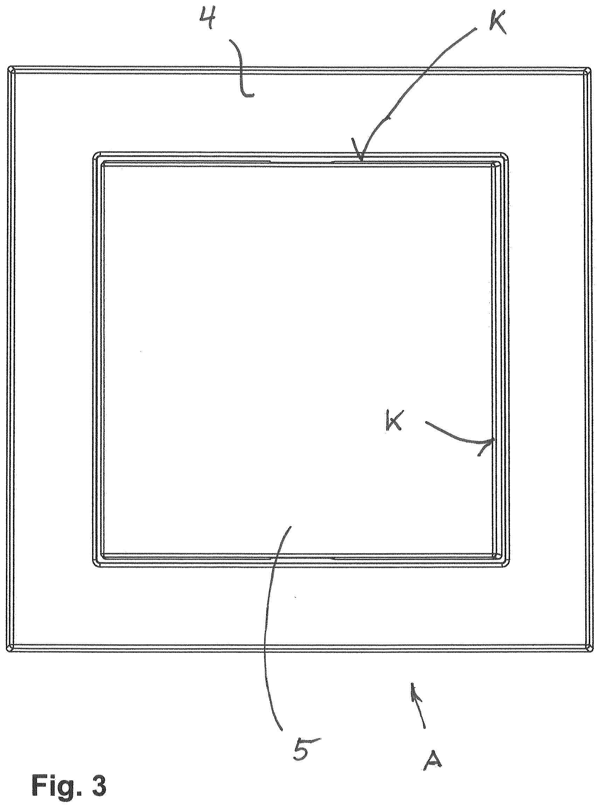

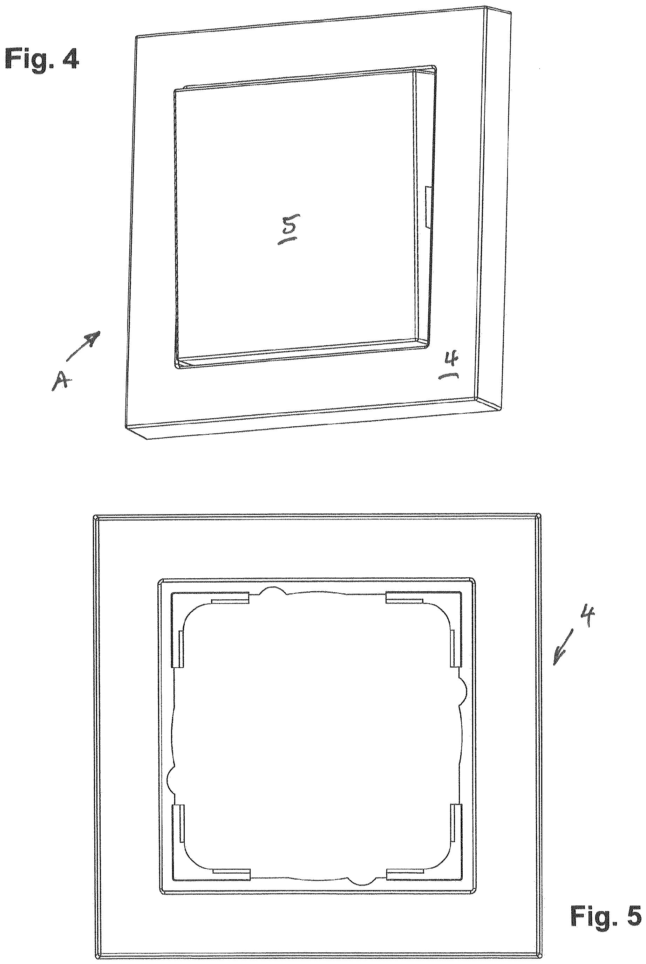

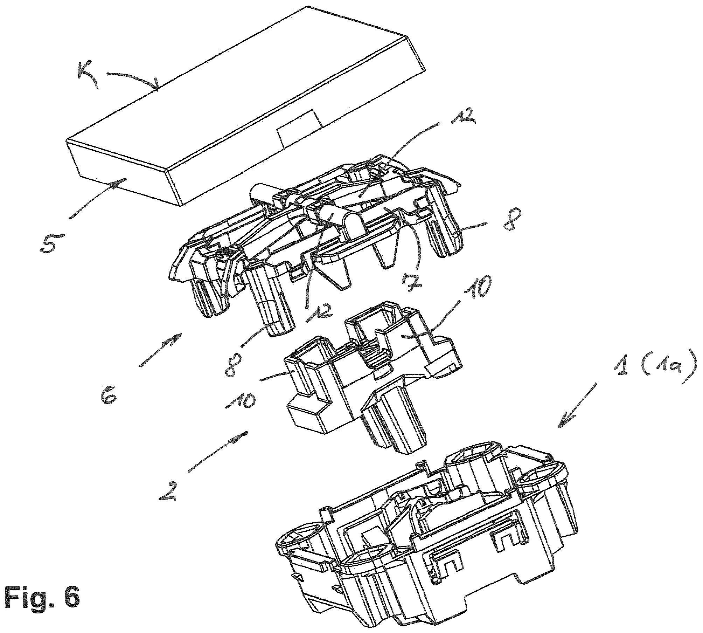

Wie sich zunächst aus den Fig. 1, 2 sowie insbesondere auch aus Fig. 6 ergibt, umfasst ein erfindungsgemäßer elektrischer Schalter eine Vielzahl von Bauteilen, welche sich entsprechend der gewählten Darstellung teilweise in der in Fig. 1 summarisch als "Oberteil A" bezeichneten Montageeinheit und teilweise in der in Fig. 2 summarisch als "Unterteil B" bezeichneten komplementären Montageeinheit befinden. Fig. 3 und Fig. 4 liefern ergänzend dazu zwei Draufsichten auf das Oberteil A, Fig. 5 eine Draufsicht auf einen Abdeckrahmen 4 und Fig. 6 eine perspektivische Explosionsdarstellung von wichtigen Teilen aus dem Oberteil A und aus dem Unterteil B.

Im Unterteil B befindet sich zunächst ein Schaltersockel 1, der einteilig oder - wie in der dargestellten Ausführung - zweiteilig ausgebildet sein kann. Fig. 6 zeigt dabei nur ein Sockeloberteil 1a des zweiteilig ausgebildeten Schaltersockels 1. Der Schaltersockel 1 beinhaltet in bekannter Weise elektrische Anschlusskontakte zum Anschließen von elektrischen Leitungen. Des Weiteren weist der Schaltersockel 1 ebenfalls an sich bekannte (nicht dargestellte) elektrische Schaltelemente in Form von z. B. elektrischen Kontaktwippen auf, mit denen die elektrischen Anschlusskontakte entsprechend der vorhandenen Verschaltung, z. B. als Reihenschaltung, Wechselschaltung oder dergleichen, kontaktiert werden können.

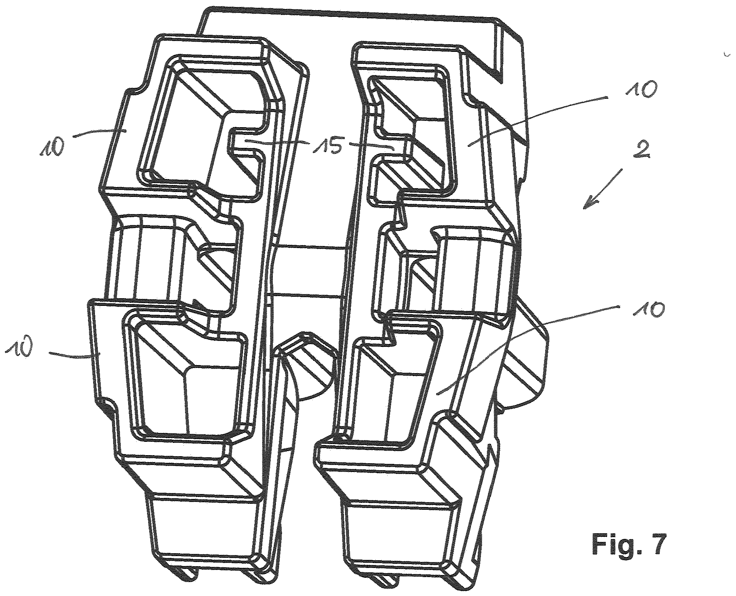

An dem Schaltersockel 1 sind mechanische Schaltelemente 2 gelagert, mit denen eine Schaltbewegung auf die elektrischen Schaltelemente übertragbar ist. Fig. 6 zeigt diesbezüglich ein Wippenelement bzw. einen Schaltarm als ein solches mögliches mechanisches Schaltelement 2, und Fig. 7 zeigt ein derartiges mechanisches Schaltelement 2 als Einzelteil. Möglich sind auch Schaltarme für den Betrieb eines Tastschalters.

Des Weiteren umfasst ein erfindungsgemäßer Schalter - ebenfalls in an sich bekannter Weise - einen Tragring 3 (siehe Fig. 2), an dem der Schaltersockel 1 befestigt bzw. befestigbar ist und mit dem der Schaltersockel 1 in einer Montageöffnung, z. B. einer Wand oder einer Unterputzdose oder dergleichen befestigbar ist. Der Tragring 3 ist durch einen Abdeckrahmen 4 (siehe Fig. 3 bis 5) abdeckbar bzw. im dargestellten Montagezustand abgedeckt, wobei der Abdeckrahmen 4 insbesondere mit Spiel derart am Tragring 3 ausgerichtet werden kann, dass eine senkrechte, d. h. vertikale Anordnung des Abdeckrahmens 4 über dem Tragring 3 möglich ist.

Der Abdeckrahmen 4 umschließt eine Schalterwippe 5 oder eine Schaltertaste 5, die beispielsweise eine spezielle Design-Gestaltung aufweisen kann. Die Schaltertaste 5 oder die Schalterwippe 5 ist mit den mechanischen Schaltelementen 2, die auf dem Schaltersockel 1 vorhanden sind, derart - z. B. kraftschlüssig und formschlüssig - verbunden, dass die Schaltbewegung der Schaltertaste 5 bzw. der Schalterwippe 5 auf die mechanischen Schaltelemente 2 - und von dort auf die elektrischen Schaltelemente - übertragen wird. Dabei können im Rahmen der Erfindung z. B. auch zwei oder mehr Schalterwippen 5 oder Schaltertasten 5 nebeneinander im Abdeckrahmen 4 gelagert sein, sowie - diesen individuell zugeordnet - auch mehrere mechanische Schaltelemente 2 vorhanden sein.

Die Schalterwippe 5 bzw. die Schaltertaste 5 ist auf einem Klemmstück 6 gelagert. Das Klemmstück 6 kann - wie insbesondere Fig. 1 und 6 zeigen - bevorzugt rahmenförmig ausgebildet sein, wobei es außenseitig eine der Form der Öffnung des Tragrings 3 angepasste Rahmenform aufweist. Dabei wird es insbesondere von vier, in der Grundgestalt geradlinigen, in den Rahmeneckbereichen verbundenen Rahmenstegen 7 gebildet. In den Rahmeneckbereichen sind in Richtung auf den Schaltersockel 1 abstehende, zweckmäßigerweise hohlzylindrische Klemmfortsätze 8 an dem Klemmstück 6 angeformt, durch die das Klemmstück 6 fixiert bzw. fixierbar ist. Das Sockeloberteil 1a des Schaltersockels 1 verläuft dabei insbesondere durch die Tragringöffnung hindurch, so dass der Tragring 3 mit dem Schaltersockel 1 fest verbunden ist. Das Sockeloberteil 1a weist Durchbrüche 9 auf, die derart in ihrem Diagonalabstand und ihrer Größe und Form bemessen sind, dass die Klemmfortsätze 8 im in die Durchbrüche 9 eingesteckten Zustand in diesen kraftschlüssig gehalten werden.

Wie des Weiteren Fig. 2 und 6 zeigen, weisen die am Schaltersockel 1 gelagerten Schaltelemente 2 an ihrer der Schalterwippe 5 bzw. der Schaltertaste 5 zugekehrten Seite zur Verbindung mit der Schalterwippe 5 bzw. der Schaltertaste 5 insbesondere als Hohlprofile ausgebildete Ansätze 10 auf.

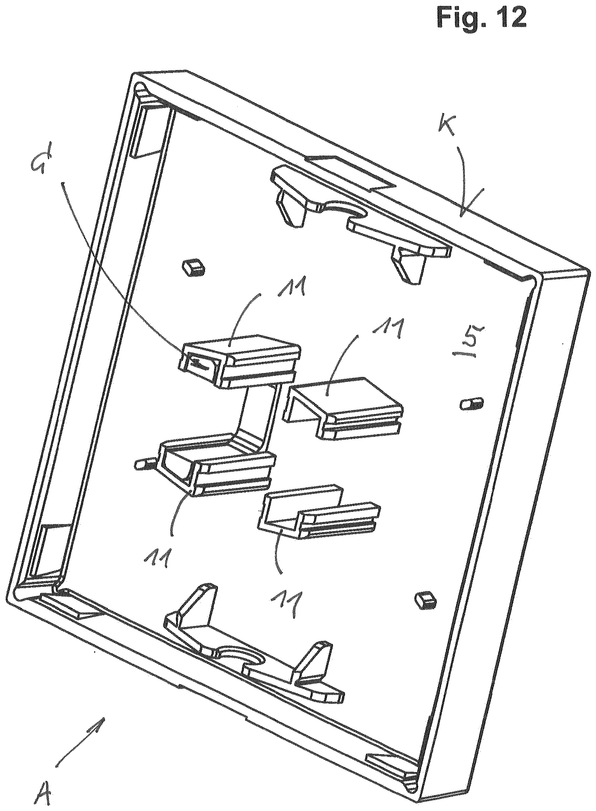

In komplementärer Ausbildung weist die Schalterwippe 5 bzw. die Schaltertaste 5 - siehe Fig. 1 (und dann auch Fig. 12) - zur Verbindung mit den am Schaltersockel 1 gelagerten Schaltelementen 2 an ihrer Unterseite Profilfortsätze 11 auf, welche das Klemmstück 6 durchgreifen und die im zusammengesetzten Zustand des erfindungsgemäßen Schalters in die Hohlprofil-Ansätze 10 längsverschieblich kraftschlüssig, in ihrer Umfangsrichtung formschlüssig eingreifen bzw. in diese eingeführt sind. Dadurch ist ein seitliches Spiel für eine Dreh- bzw. Schwenkbewegung der Profilfortsätze 11 in den Hohlprofil-Ansätzen 10 um ihre Längsachse und eine Spielfreiheit in Bezug auf die zu übertragenden Schaltbewegungen der Schalterwippe 5 bzw. der Schaltertaste 5 auf die mechanischen Schaltelemente 2 vorhanden. Die längsverschiebbare Lagerung der Profilfortsätze 11 in den Hohlprofil-Ansätzen 10 ermöglicht zudem, insbesondere in Verbindung mit den senkrecht zur Montageöffnung verlaufenden Klemmfortsätzen 9, einen Tapetenausgleich.

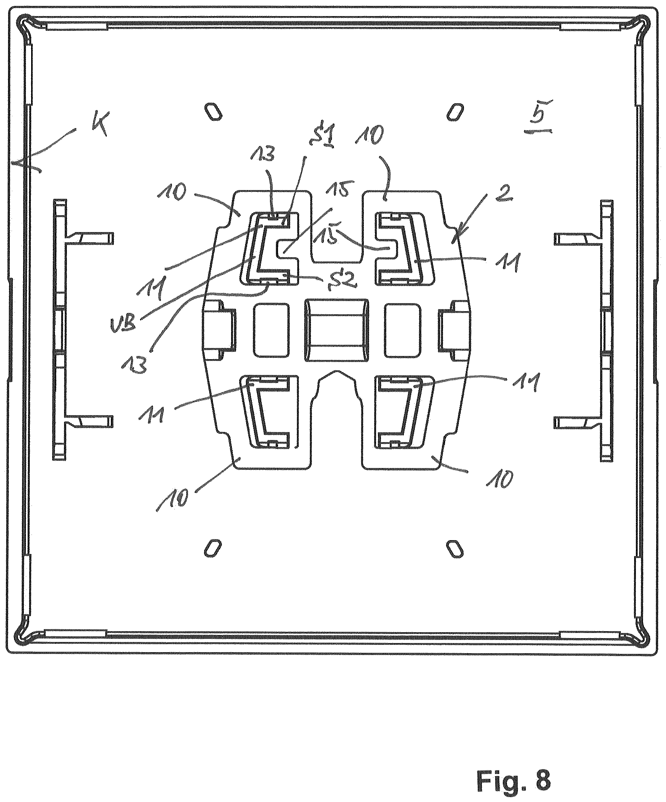

In der dargestellten Ausführung weist das Klemmstück 6 innerhalb seiner durch die Rahmenstege 7 gebildeten Rahmenstruktur 7 einen Einsatz mit zwei sich kreuzenden Stegen 12 auf, wodurch eine Unterteilung in vier Quadranten erfolgt. Jeder der vier Quadranten wird von einem Profilfortsatz 11 durchragt, wobei diese hinsichtlich der sich kreuzenden Stege 12 zumindest paarweise axialsymmetrisch angeordnet sind. Die axialsymmetrische Anordnung wird auch durch Fig. 8 verdeutlicht. In einer nicht dargestellten Ausführung könnten auch nur zwei der Quadranten von den Profilfortsätzen 11 durchragt sein.

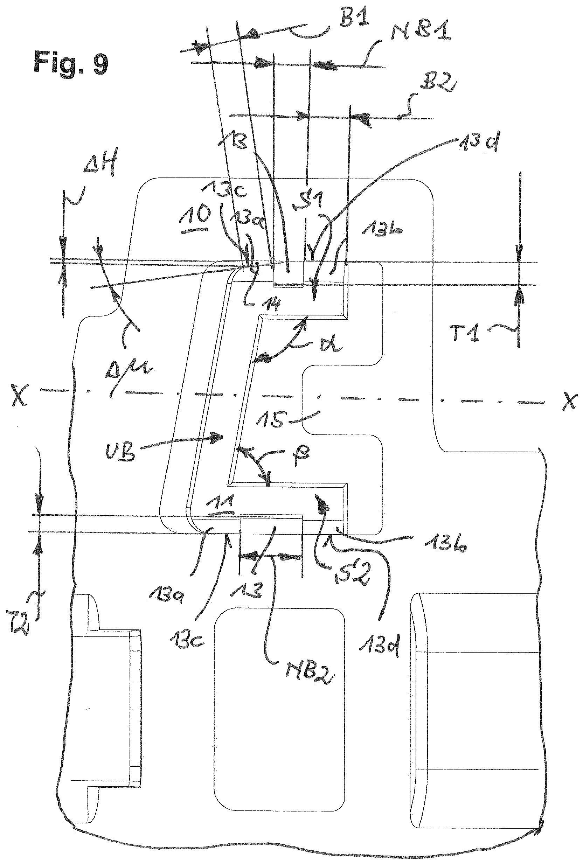

Fig. 7 bis 9 veranschaulichen weitere Details der als Hohlprofile ausgebildeten Ansätze 10 sowie der Profilfortsätze 11. So ist diesen Figuren (Fig. 8 und 9) zu entnehmen, dass die Profilfortsätze 11 in der Draufsicht von der Grundgestalt her U-förmig ausgebildet sind, wobei mindestens ein Schenkel S1, S2 des U, in der dargestellten Ausführung beide Schenkel S1, S2 des U, außenseitig jeweils eine Nut 13 aufweist, die beidseitig von Nutaußenwänden begrenzt ist, welche in Fig. 9 mit den Bezugszeichen 13a, 13b bezeichnet sind. Die Nutaußenwände 13a, 13b bilden über eine Höhe der Profilfortsätze 11 in Längsrichtung der Nut 13 verlaufende Funktionsflächen 13c, 13d aus, an denen im Montagezustand die komplementären Hohlprofil-Ansätze 10 innenseitig anliegen.

Erfindungsgemäß ist vorgesehen, dass die Funktionsflächen 13c, 13d der Nutaußenwände 13a, 13b höhenversetzt und/oder winkelversetzt zueinander angeordnet sind. Eine derartige Ausbildung zeigen die beiden Funktionsflächen 13c, 13d in Fig. 9. Diese weisen sowohl einen Höhenversatz ΔH als auch einen Winkelversatz Δµ zueinander auf. Dadurch ist zwischen der Nutaußenwand 13a, welche höhen- und winkelversetzt zur Nutaußenwand 13b angeordnet ist, und der Innenwand des korrespondierenden als Hohlprofil ausgebildeten Ansatzes 10 ein insbesondere keilförmiger Spalt 14 ausgebildet. Ohne Winkelversatz Δµ wäre dieser Spalt 14 durch die dann parallel verlaufenden Wände des Profilfortsatzes 11 (Nutaußenwand 13a) und des Hohlprofil-Ansatzes 10 (also nicht keilförmig) ausgebildet. Wie bereits oben ausgeführt, entsteht dadurch vorteilhafterweise mindestens ein zusätzlicher Freiheitsgrad für eine laterale und/oder rotatorische Bewegung der Profilfortsätze 11 innerhalb der Hohlprofil-Ansätze 10.

Neben den bereits genannten Vorteilen der auf diese Weise erfindungsgemäß bewirkten Toleranzerhabenheit und der zusätzlichen Angriffsmöglichkeit für ein Demontage-Werkzeug bietet die konkrete geometrische Gestaltung des Höhenversatzes ΔH und/oder des Winkelversatzes Δµ auch als weiteren Vorteil die Möglichkeit, für einen vorgegebenen Werkstoff die Steifigkeit bzw. die Nachgiebigkeit der Profilfortsätze 11 in jedem Schenkel S1, S2 des U lokal gezielt einzustellen. Unter diesem Gesichtspunkt kann auch vorgesehen sein, dass die Funktionsflächen 13c, 13d der Nutaußenwände 13a, 13b - wie in Fig. 9 gezeigt - voneinander abweichende Breiten B1, B2 aufweisen.

Zur Bestimmung der integralen Steifigkeit bzw. der dazu komplementären Nachgiebigkeit der Profilfortsätze 11 ist neben einer Materialkonstante das sogenannte Flächenträgheitsmoment des gesamten Querschnitts des jeweiligen Profilfortsatzes 11 heranzuziehen, welches durch die geometrische Form und Größe des Querschnitts bestimmt wird. Hierbei kann der Gesamt-Querschnitt in geometrisch regelmäßig ausgebildete Teilflächen, wie Rechtecke und Dreiecke, zerlegt werden, deren Einzel-Flächenträgheitsmomente nach dem sogenannten Satz von Steiner zu einem Gesamt-Flächenträgheitsmoment zusammengefügt werden, welches dann die Biege- und Torsionssteifigkeit des Profilfortsatzes 11 bestimmt.

Da die Trägheitsmomente auch von der Achsorientierung der Querschnittsflächen abhängen, kann dabei zur Erzielung einer optimalen Biege- und Torsionssteifigkeit mit Vorteil vorgesehen sein, dass jeweils ein Schenkel S1 des U der Profilfortsätze 11 in einem stumpfen Winkel α zur Basis UB des U und der andere Schenkel S2 des U in einem spitzen Winkel β zur Basis UB des U steht. Die jeweilige Basis UB des U der Profilfortsätze 11 kann dabei schräg zu Außenkanten (siehe insbesondere Kante K in Fig. 1, 8 und 12) der insbesondere mit rechteckigem, vorzugsweise quadratischem, Querschnitt ausgebildeten Schalterwippe 5 oder der Schaltertaste 5 verlaufen, während die Schenkel des U der Profilfortsätze 11 bevorzugt parallel zueinander und parallel bzw. rechtwinklig zu den Außenkanten K verlaufen. Dadurch besitzen die Profilfortsätze 11 im Hinblick auf eine die Basis UB des U teilende Mittenachse X-Xdes U asymmetrische Ausbildung.

Die von der Grundgestalt her U-förmigen Profilfortsätze 11 können in der Draufsicht gesehen auch dadurch asymmetrisch ausgebildet sein, dass beide Schenkel S1, S2 des U jeweils außenseitig eine Nut 13 aufweisen und sich die beiden Nuten 13 vorzugsweise in ihrer Nutbreite NB1, NB2 unterscheiden, wie dies ebenfalls durch Fig. 5 gezeigt ist. Auch die Nuttiefen T1, T2 können differieren.

Was die konstruktive Ausbildung der als Hohlprofile ausgebildeten Ansätze 10 der mechanischen Schaltelemente 2 betrifft, so können diese - wie in Fig. 7 bis 9 dargestellt - zumindest oberseitig eine in der Draufsicht gesehen offene Kontur aufweisen. Diese offene, durch die jeweiligen Wände gebildete Kontur der als Hohlprofile ausgebildeten Ansätze 10 kann dabei jeweils in der Grundgestalt in der Draufsicht U-förmig (Fig. 7 und 8 oben, Fig. 9) sein, wobei sie im Montagezustand die in der Draufsicht gesehen von der Grundgestalt her ebenfalls U-förmigen Profilfortsätze 11 an mindestens drei Seiten außenseitig partiell umschließt (siehe Fig. 8 und 9).

Andererseits ist es auch möglich, dass - wie in Fig. 7 und 8 unten gezeigt - die als Hohlprofile ausgebildeten Ansätze 10 der mechanischen Schaltelemente 2 eine in der Draufsicht gesehen geschlossene Kontur aufweisen, welche im Montagezustand die in der Draufsicht von der Grundgestalt her U-förmigen Profilfortsätze 11 außenseitig vollständig umschließt.

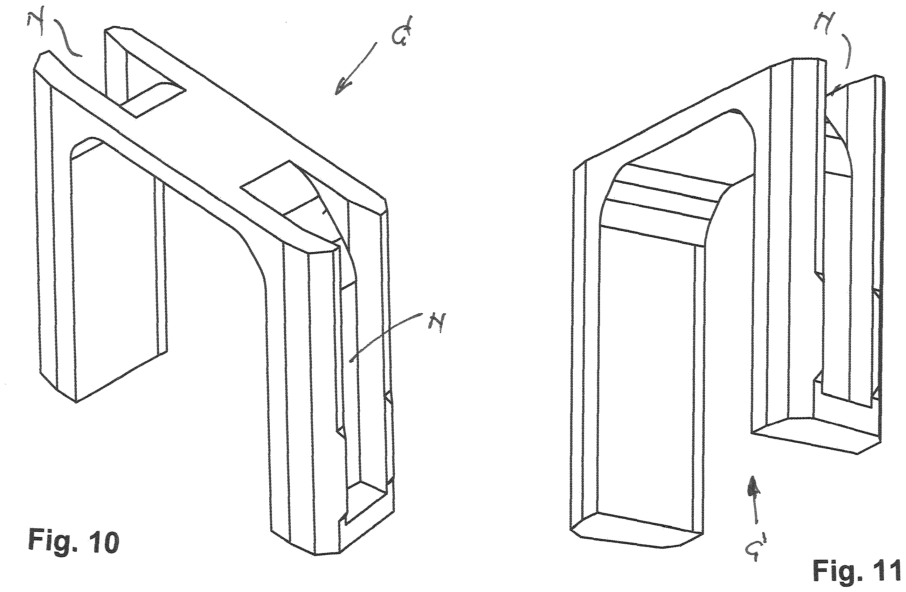

Für eine lagerichtige Zuordnung der Schalterwippe 5 oder der Schaltertaste 5 (Oberteil A) in Bezug auf die mechanischen Schaltelemente 2 (Unterteil B) kann insbesondere im Sinne einer Kodierung die Möglichkeit der Verwendung eines Sperrstückes C vorgesehen sein, wie ein solches exemplarisch in Fig. 10 und 11 dargestellt ist.

Das Sperrstück C kann insbesondere formschlüssig bzw. formangepasst in die U-Formen eines Paares von zwei Profilfortsätzen 11 eingefügt werden, die sich mit ihrer offenen Seite des U diametral gegenüberstehen, wie dies Fig. 12 zeigt. Das Sperrstück C ist dabei in der Vorderansicht (und auch Rückansicht) bevorzugt U-förmig ausgebildet, wobei das Sperrstück C im Sinne einer materialökomischen Herstellung nicht als Vollkörper ausgeführt muss, sondern - wie dargestellt, vorzugsweise durch das Vorhandensein von Nuten N, insbesondere dreiseitig - randoffen sein kann.

Die Paare der komplementären Hohlprofil-Ansätze 10 sind dabei in ihrer konstruktiven Gestalt derart auszubilden, dass ein Profilfortsatz-Paar 11/11 mit vorhandenem Sperrstück C nur in ein korrespondierendes Paar 10/10 der Hohlprofil-Ansätze 10 einsetzbar ist, welches die gewünschte Ausrichtung der Schalterwippe 5 oder der Schaltertaste 5 gewährleistet. Dabei können die in Fig. 7 bis 9 mit dem Bezugszeichen 15 gekennzeichneten Erhebungen als mit dem Sperrstück C zusammenwirkende Gegensperren wirken.

Durch die Erfindung, die an mindestens einem Profilfortsatz 11 mindestens eine höhen- und/oder winkelversetzte Funktionsfläche 13c an mindestens einer Nutenaußenwand 13a vorsieht, wird mit Vorteil in der Verbindung der im Montagezustand ineinander greifenden Profilfortsätze 11 und Hohlprofil-Ansätze 10 eine Selbstregulierung erreicht. Wenn - z. B. aufgrund im Rahmen der zulässigen Toleranzen auftretender Maßabweichungen - sehr hohe Flächenpressungen zwischen der Funktionsfläche 13c des Profilfortsatzes 11 und der korrespondierenden Innenfläche des Hohlprofil-Ansatzes 10 auftreten, kann sich der Profilfortsatz 11 an seiner höhen- und/oder winkelversetzten Funktionsfläche 13c so lange deformieren, bis neben einer optimalen Formanpassung auch ein optimaler Klemmzustand des Profilfortsatzes 11 im Hohlprofil-Ansatz 10 erreicht ist.

Die Erfindung ist nicht auf das dargestellte und beschriebene Ausführungsbeispiel beschränkt, sondern umfasst auch alle im Sinne der Erfindung gleichwirkenden Ausführungen. So könnte beispielsweise auch eine zur Darstellung in Fig. 8 (bzw. auch Fig. 9) inverse (spiegelbildliche) Anordnung vorliegen, bei der die Öffnungen des jeweiligen "U" der Profilfortsätze 10 jeweils nicht - wie dargestellt - nach innen (aufeinander zu), sondern nach außen (voneinander weg), also zur Kante K der Schalterwippe oder Schaltertaste 5 hin, zeigen, wobei die komplementären Profilfortsätze 11 ebenfalls entsprechend umgeordnet sind. Es wird ausdrücklich betont, dass das Ausführungsbeispiel auch nicht auf alle seine in Kombination beschriebenen Merkmale beschränkt ist, vielmehr kann jedes einzelne Teilmerkmal auch losgelöst von allen anderen Teilmerkmalen für sich eine erfinderische Bedeutung haben.

Des Weiteren kann der Fachmann zweckmäßige technische Maßnahmen ergänzen, ohne dass der Rahmen der Erfindung verlassen wird. So ist beispielsweise insbesondere Fig. 9 zu entnehmen, dass die außenseitigen Übergänge der Schenkel S1, S2 des U des Profilfortsatzes 11 zur Basis UB des U verrundet sein können. Auch könnten die Funktionsflächen 13a, 13b an den Nutaußenwänden 13a, 13b leicht ballig ausgebildet sein.

Insbesondere das mechanische Schaltelement 2 mit den Hohlprofil-Ansätzen 10, der Abdeckrahmen 4, die Schalterwippe 5 oder Schaltertaste 5 mit den Profilfortsätzen 11 sowie das Klemmstück 6 und gegebenenfalls das Sperrstück C können hinterschnittfrei in fertigungstechnisch günstiger Weise als Kunststoff-Spritzgießteile hergestellt sein. Die Funktionsfächen 13c, 13d der Profilfortsätze 11 können dabei bevorzugt senkrecht in Entformungsgsrichtung verlaufen. Dies gilt auch für einen insbesondere zweiteilig ausgebildeten Schaltersockel 1 des erfindungsgemäßen elektrischen Schalters.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Schaltersockel
- 1a: Sockeloberteil von 1
- 2: mechanisches Schaltelement
- 3: Tragring
- 4: Abdeckrahmen
- 5: Schalterwippe oder Schaltertaste
- 6: Klemmstück
- 7: Rahmensteg von 6
- 8: Klemmfortsatz an 6
- 9: Durchbruch in 1/1 a für 8
- 10: Hohlprofil-Ansatz an 2
- 11: Profilfortsatz an 5
- 12: kreuzende Stege in 6
- 13: Nut in S1, S2
- 13a, 13b: Nutaußenwände von 13 (Fig. 9)
- 13c, 13d: Funktionsflächen an 13a, 13b (Fig. 9)
- 14: Spalt zwischen 13a und 13b (Fig. 9)
- 15: Erhebung zum Zusammenwirken mit C

- A: Oberteil
- B: Unterteil
- B1: Breite vom 13c
- B2: Breite von 3d
- C: Sperrstück
- K: Kante von 5
- N: Nut in C
- NB1: Breite von 13 in S1
- NB2: Breite von 13 in S2
- S1, S2: U-Schenkel von 11
- T1: Tiefe von 13 in S1
- T2: Tiefe von 13 in S2
- UB: Basis des U von 11
- X-X: Achse durch den Querschnitt von 11

- α: stumpfer Winkel zwischen S1 und UB
- β: spitzer Winkel zwischen S2 und UB
- ΔH: Höhenversatz von 13c, 13d
- Δµ: Winkelversatz von 13c, 13d

## Patentansprüche

1. Elektrischer Schalter, umfassend
- einen Schaltersockel (1) zur Aufnahme von elektrischen Anschlusskontakten, von elektrischen Schaltelementen sowie zur Aufnahme von die elektrischen Schaltelemente betätigenden, eine Schaltbewegung übertragenden mechanischen Schaltelementen (2),
wobei diese mechanischen Schaltelemente (2) an dem Schaltersockel (1) gelagert sind, und
- eine mit den mechanischen Schaltelementen verbindbare Schalterwippe (5) oder Schaltertaste (5),
wobei die mechanischen Schaltelemente (2) an ihrer der Schalterwippe (5) oder der Schaltertaste (5) zugekehrten Seite als Hohlprofile ausgebildete Ansätze (10) aufweisen,
und wobei die Schalterwippe (5) oder die Schaltertaste (5) in dazu komplementärer Weise an ihrer den mechanischen Schaltelementen (2) zugekehrten Seite Profilfortsätze (11) aufweist,
die im Montagezustand des Schalters in die Hohlprofil-Ansätze (10) längsverschieblich kraftschlüssig und in ihrer Umfangsrichtung formschlüssig eingreifen, und die in der Draufsicht von der Grundgestalt her U-förmig ausgebildet sind,
wobei mindestens ein Schenkel (S1, S2) des U außenseitig eine Nut (13) aufweist, die beidseitig von Nutaußenwänden (13a, 13b) begrenzt ist, welche über eine Höhe der Profilfortsätze (11) in Längsrichtung der Nut (13) verlaufende Funktionsflächen (13c, 13d) zur jeweiligen Anlage an den komplementären Hohlprofil-Ansätzen (10) ausbilden,
**dadurch gekennzeichnet, dass** die Funktionsflächen (13c, 13d) der Nutaußenwände (13a, 13b) höhenversetzt (ΔH) und/oder winkelversetzt (Δµ) zueinander angeordnet sind.

2. Elektrischer Schalter nach Anspruch 1,
**dadurch gekennzeichnet, dass** die Funktionsflächen (13c, 13d) der Nutaußenwände (13a, 13b) voneinander abweichende Breiten (B1, B2) aufweisen.

3. Elektrischer Schalter nach Anspruch 1 oder 2,
**dadurch gekennzeichnet, dass** jeweils ein Schenkel (S1) des U der Profilfortsätze (11) in einem stumpfen Winkel (a) zur Basis (UB) des U und der andere Schenkel (S2) des U in einem spitzen Winkel zur Basis (UB) des U steht.

4. Elektrischer Schalter nach einem der Ansprüche 1 bis 3,
**dadurch gekennzeichnet, dass** die Schenkel (S1, S2) des U der Profilfortsätze (11) parallel zueinander verlaufen.

5. Elektrischer Schalter nach einem der Ansprüche 1 bis 4,
**dadurch gekennzeichnet, dass** die von der Grundgestalt her U-förmigen Profilfortsätze (11) in der Draufsicht gesehen asymmetrisch ausgebildet sind, wobei beide Schenkel (S1, S2) des U außenseitig eine Nut (13) aufweisen und sich die beiden Nuten (13) vorzugsweise in ihrer Nutbreite (B1, B2) und gegebenenfalls auch in ihrer Nuttiefe (T1, T2) unterscheiden.

6. Elektrischer Schalter nach einem der Ansprüche 1 bis 5,
**dadurch gekennzeichnet, dass** die jeweilige Basis (UB) des U der Profilfortsätze (11) schräg zu Außenkanten (K) der Schalterwippe (5) oder der Schaltertaste (5) verläuft.

7. Elektrischer Schalter nach einem der Ansprüche 1 bis 6,
**dadurch gekennzeichnet, dass** die als Hohlprofile ausgebildeten Ansätze (10) der mechanischen Schaltelemente (2) zumindest oberseitig eine in der Draufsicht gesehen offene Kontur aufweisen.

8. Elektrischer Schalter nach Anspruch 7,
**dadurch gekennzeichnet, dass** die offene Kontur der als Hohlprofile ausgebildeten Ansätze (10) jeweils in der Grundgestalt in der Draufsicht U-förmig ist, wobei sie im Montagezustand die in der Draufsicht gesehen von der Grundgestalt her U-förmigen Profilfortsätze (11) an mindestens drei Seiten außenseitig partiell umschließt.

9. Elektrischer Schalter nach einem der Ansprüche 1 bis 6,
**dadurch gekennzeichnet, dass** die als Hohlprofile ausgebildeten Ansätze (10) der mechanischen Schaltelemente (2) eine in der Draufsicht gesehen geschlossene Kontur aufweisen, welche im Montagezustand die in der Draufsicht von der Grundgestalt her U-förmigen Profilfortsätze (11) außenseitig vollständig umschließt.

10. Elektrischer Schalter nach einem der Ansprüche 1 bis 9,
**dadurch gekennzeichnet, dass** mit dem Schaltersockel (1) ein Tragring (3) zum Befestigen des Schaltersockels (1) in einer Montageöffnung verbunden ist.

11. Elektrischer Schalter nach einem der Ansprüche 1 bis 10,
**dadurch gekennzeichnet, dass** die Schalterwippe (5) oder Schaltertaste (5) innerhalb eines Abdeckrahmens (4) gelagert ist.

12. Elektrischer Schalter nach einem der Ansprüche 1 bis 11,
**dadurch gekennzeichnet, dass** die Schalterwippe (5) oder Schaltertaste (5) auf einem Klemmstück (6) gelagert ist.

13. Elektrischer Schalter nach Anspruch 12,
**dadurch gekennzeichnet, dass** das Klemmstück (6) rahmenförmig ausgebildet ist, wobei es vorzugsweise einen Einsatz mit zwei sich kreuzenden Stegen (12) umfasst, so dass es in vier Quadranten unterteilt ist.

14. Elektrischer Schalter nach Anspruch 12,
**dadurch gekennzeichnet, dass** mindestens zwei, vorzugsweise alle vier Quadranten, von den Profilfortsätzen (11) durchragt sind.

15. Elektrischer Schalter nach einem der Ansprüche 1 bis 14,
**dadurch gekennzeichnet, dass** die Profilfortsätze (11) paarweise axialsymmetrisch zueinander auf der Schalterwippe (5) oder auf der Schaltertaste (5) angeordnet sind.

16. Elektrischer Schalter nach einem der Ansprüche 1 bis 15,
**dadurch gekennzeichnet, dass** in die Profilfortsätze (11) paarweise ein Sperrstück (C) eingesetzt bzw. einsetzbar ist, wobei ein Profilfortsatz-Paar (11/11) mit eingesetztem Sperrstück (C) nur in ein korrespondierendes Paar (10/10) von Hohlprofil-Ansätzen (10) einsetzbar ist, welches eine gewünschte Ausrichtung der Schalterwippe (5) oder der Schaltertaste (5) gewährleistet, wobei das jeweilige Sperrstück (C) insbesondere mit mindestens einer im Hohlprofil-Ansatz (10) als Gegensperre angeordneten Erhebung (15) zusammenwirkt.

## Claims

1. Electrical switch, comprising
- a switch base (1) for receiving electrical connection contacts, electrical switching elements and also for receiving mechanical switching elements (2) which operate the electrical switching elements and transmit a switching movement,
wherein these mechanical switching elements (2) are mounted on the switch base (1), and
- a rocker switch (5) or pushbutton (5) which can be connected to the mechanical switching elements, wherein the mechanical switching elements (2) have, on their side which faces the rocker switch (5) or the pushbutton (5), attachments (10) which are designed as hollow profiles,
and wherein the rocker switch (5) or the pushbutton (5) has, on its side which faces the mechanical switching elements (2), profile projections (11) in a complementary manner,
which profile projections engage in a longitudinally displaceably force-fitting manner into the hollow profile attachments (10) and in an interlocking manner in its circumferential direction in the mounted state of the switch, and which are designed in a U-shaped manner in respect of the basic shape in plan view,
wherein at least one limb (S1, S2) of the U has a groove (13) on the outer side, which groove is delimited on either side by groove outer walls (13a, 13b) which form functional areas (13c, 13d), which run above a height of the profile projections (11) in the longitudinal direction of the groove (13), for respectively bearing against the complementary hollow profile attachments (10) ,
**characterized in that** the functional areas (13c, 13d) of the groove outer walls (13a, 13b) are arranged with a vertical offset (ΔH) and/or an angular offset (Δµ) in relation to one another.

2. Electrical switch according to Claim 1, **characterized in that** the functional areas (13c, 13d) of the groove outer walls (13a, 13b) have widths (B1, B2) which differ from one another.

3. Electrical switch according to Claim 1 or 2, **characterized in that** in each case one limb (S1) of the U of the profile projections (11) is at an obtuse angle (α) in relation to the base (UB) of the U and the other limb (S2) of the U is at an acute angle in relation to the base (UB) of the U.

4. Electrical switch according to one of Claims 1 to 3,
**characterized in that** the limbs (S1, S2) of the U of the profile projections (11) run parallel in relation to one another.

5. Electrical switch according to one of Claims 1 to 4,
**characterized in that** the profile projections (11) which are U-shaped in respect of the basic shape are designed in an asymmetrical manner in plan view, wherein the two limbs (S1, S2) of the U have a groove (13) on the outer side and the two grooves (13) preferably differ in respect of their groove width (B1, B2) and possibly also in respect of their groove depth (T1, T2).

6. Electrical switch according to one of Claims 1 to 5,
**characterized in that** the respective base (UB) of the U of the profile projections (11) runs obliquely in relation to outer edges (K) of the rocker switch (5) or of the pushbutton (5).

7. Electrical switch according to one of Claims 1 to 6,
**characterized in that** the attachments (10) of the mechanical switching elements (2), which attachments are designed as hollow profiles, have a contour which is open as seen in plan view at least at the top side.

8. Electrical switch according to Claim 7,
**characterized in that** the open contour of the attachments (10) which are designed as hollow profiles are each U-shaped in respect of the basic shape in plan view, wherein the said open contour partially encloses the outer side of profile projections (11), which are U-shaped in respect of the basic shape as seen in plan view, on at least three sides in the mounted state.

9. Electrical switch according to one of Claims 1 to 6,
**characterized in that** the attachments (10) of the mechanical switching elements (2), which attachments are designed as hollow profiles, have a contour which is closed as seen in plan view and completely encloses the outer side of profile projections (11), which are U-shaped in respect of the basic shape in plan view, in the mounted state.

10. Electrical switch according to one of Claims 1 to 9,
**characterized in that** a carrying ring (3) is connected to the switch base (1) in order to fasten the switch base (1) in a mounting opening.

11. Electrical switch according to one of Claims 1 to 10,
**characterized in that** the rocker switch (5) or the pushbutton (5) is mounted within a covering frame (4).

12. Electrical switch according to one of Claims 1 to 11,
**characterized in that** the rocker switch (5) or pushbutton (5) is mounted on a clamping piece (6).

13. Electrical switch according to Claim 12,
**characterized in that** the clamping piece (6) is of frame-like design, wherein it preferably comprises an insert with two intersecting webs (12), so that it is subdivided into four quadrants.

14. Electrical switch according to Claim 12,
**characterized in that** the profile projections (11) project through at least two, preferably all four, quadrants.

15. Electrical switch according to one of Claims 1 to 14,
**characterized in that** the profile projections (11) are arranged axially symmetrically in relation to one another in pairs on the rocker switch (5) or on the pushbutton (5) .

16. Electrical switch according to one of Claims 1 to 15,
**characterized in that** a locking piece (C) is inserted or can be inserted into the profile projections (11) in pairs, wherein one pair of profile projections (11/11) with an inserted locking piece (C) can be inserted only into a corresponding pair (10/10) of hollow profile attachments (10) which ensures a desired orientation of the rocker switch (5) or the pushbutton (5), wherein the respective locking piece (C) interacts, in particular, with at least one raised portion (15) which is arranged in the hollow profile attachment (10) as a mating catch.

## Revendications

1. Commutateur électrique, comprenant
- un socle de commutateur (1) destiné à recevoir des contacts de raccordement électriques, d'éléments de commutation électriques et à recevoir des éléments de commutation mécaniques (2) qui actionnent les éléments de commutation électriques et transmettent un mouvement de commutation,
dans lequel lesdits éléments de commutation mécaniques (2) sont montés sur le socle de commutateur (1), et
- un commutateur à bascule (5) ou un bouton de commutateur (5) qui peut être relié aux éléments de commutation mécaniques,
dans lequel les éléments de commutation mécaniques (2) présentent des saillies (10) réalisées sous la forme de profilés en creux sur leur côté tourné vers le commutateur à bascule (5) ou le bouton de commutateur (5),
et dans lequel le commutateur à bascule (5) ou le bouton de commutateur (5) présente, sur son côté tourné vers les éléments de commutation mécaniques (2), des saillies profilées (11) complémentaires de celui-ci
qui, à l'état monté du commutateur, s'engagent dans les saillies profilées en creux (10) de manière à pouvoir coulisser longitudinalement par adhérence et dans leur direction périphérique par complémentarité de forme, et qui sont en forme de U en vue de dessus par rapport à la forme de base,
dans lequel au moins une branche (S1, S2) du U présente à l'extérieur une rainure (13) qui est délimitée des deux côtés par des parois extérieures de rainure (13a, 13b) qui forment des surfaces fonctionnelles (13c, 13d) s'étendant sur une hauteur des saillies profilées (11) dans la direction longitudinale de la rainure (13) pour un appui respectif contre les saillies profilées en creux complémentaires (10),
**caractérisé en ce que** les surfaces fonctionnelles (13c, 13d) des parois extérieures de rainure (13a, 13b) sont disposées de manière décalée en hauteur (ΔH) et/ou selon un angle (Δµ) les unes par rapport aux autres.

2. Commutateur électrique selon la revendication 1,
**caractérisé en ce que** les surfaces fonctionnelles (13c, 13d) des parois extérieures de rainure (13a, 13b) présentent des largeurs (B1, B2) différentes les unes des autres.

3. Commutateur électrique selon la revendication 1 ou 2,
**caractérisé en ce qu'**une branche (S1) respective du U des saillies profilées (11) forme un angle obtus (α) avec la base (UB) du U et **en ce que** l'autre branche (S2) du U forme un angle aigu avec la base (UB) du U.

4. Commutateur électrique selon l'une des revendications 1 à 3,
**caractérisé en ce que** les branches (S1, S2) du U des saillies profilées (11) s'étendent parallèlement l'une à l'autre.

5. Commutateur électrique selon l'une des revendications 1 à 4,
**caractérisé en ce que** les saillies profilées (11) en forme de U par rapport à la forme de base sont réalisées de manière asymétrique en vue de dessus,
dans lequel les deux branches (S1, S2) du U présentent une rainure (13) à l'extérieur et les deux rainures (13) diffèrent de préférence par leur largeur de rainure (B1, B2) et éventuellement aussi par leur profondeur de rainure (T1, T2).

6. Commutateur électrique selon l'une des revendications 1 à 5,
**caractérisé en ce que** la base respective (UB) du U des saillies profilées (11) s'étend de manière oblique par rapport aux bords extérieurs (K) du commutateur à bascule (5) ou du bouton de commutateur (5).

7. Commutateur électrique selon l'une des revendications 1 à 6,
**caractérisé en ce que** les saillies (10) réalisées sous la forme de profilés en creux des éléments de commutation mécaniques (2) présentent en vue de dessus un contour ouvert au moins sur la face supérieure.

8. Commutateur électrique selon la revendication 7,
**caractérisé en ce que** le contour ouvert des saillies (10) réalisées sous la forme de profilés en creux est respectivement en forme de U dans la forme de base en vue de dessus, dans lequel, à l'état monté, il entoure partiellement, sur au moins trois côtés à l'extérieur, les saillies profilées (11) en forme de U par rapport à la forme de base en vue de dessus.

9. Commutateur électrique selon l'une des revendications 1 à 6,
**caractérisé en ce que** les saillies (10) réalisées sous la forme de profilés en creux des éléments de commutation mécaniques (2) présentent un contour fermé en vue de dessus,
qui, à l'état monté, entoure entièrement à l'extérieur les saillies profilées (11) en forme de U en vue de dessus par rapport à la forme de base.

10. Commutateur électrique selon l'une des revendications 1 à 9,
**caractérisé en ce qu'**une bague de support (3) destinée à fixer le socle de commutateur (1) dans une ouverture de montage est reliée au socle de commutateur (1).

11. Commutateur électrique selon l'une des revendications 1 à 10,
**caractérisé en ce que** le commutateur à bascule (5) ou le bouton de commutateur (5) est monté dans un châssis de recouvrement (4).

12. Commutateur électrique selon l'une des revendications 1 à 11,
**caractérisé en ce que** le commutateur à bascule (5) ou le bouton de commutateur (5) est monté sur une pièce de serrage (6).

13. Commutateur électrique selon la revendication 12,
**caractérisé en ce que** la pièce de serrage (6) est réalisée sous la forme d'un châssis, et comprend de préférence un insert présentant deux nervures (12) qui se croisent, de sorte qu'il est divisé en quatre quadrants.

14. Commutateur électrique selon la revendication 12,
**caractérisé en ce qu'**au moins deux quadrants, et de préférence les quatre quadrants, sont traversés par les saillies profilées (11).

15. Commutateur électrique selon l'une des revendications 1 à 14,
**caractérisé en ce que** les saillies profilées (11) sont disposées par paires, de manière axialement symétrique l'une par rapport à l'autre, sur le commutateur à bascule (5) ou sur le bouton de commutateur (5).

16. Commutateur électrique selon l'une des revendications 1 à 15,
**caractérisé en ce qu'**une pièce de verrouillage (C) est insérée ou peut être insérée par paires dans les saillies profilées (11), dans lequel une paire de saillies profilées (11/11) dotées d'une pièce de verrouillage (C) insérée ne peut être insérée que dans une paire correspondante (10/10) de saillies profilées en creux (10), cela garantissant un alignement souhaité du commutateur à bascule (5) ou du bouton de commutateur (5), dans lequel la pièce de verrouillage (C) respective coopère en particulier avec au moins une protubérance (15) disposée dans la saillie profilée en creux (10) en tant que dispositif de contre-verrouillage.
